# EUROPÄISCHE PATENTSCHRIFT

(11) **EP 0 567 812 B1**
(45) Veröffentlichungstag und Bekanntmachung des Hinweises auf die Patenterteilung: **25.09.1996**
(21) Anmeldenummer: 93105648.5
(22) Anmeldetag: 06.04.1993
(51) Int. Cl.: C08F 2/24, C08F 265/00, C08F 265/06

(54) **Wässrige Polymerisatdispersionen**
Aqueous polymer dispersions
Dispersions polymères aqueuses

(30) Priorität: 29.04.1992 DE 4213964
(43) Veröffentlichungstag der Anmeldung: 03.11.1993
(73) Patentinhaber: BASF Aktiengesellschaft, 67063 Ludwigshafen (DE)
(72) Erfinder: Bauer, Gerhard, Dr., W-6940 Weinheim (DE); Aydin, Oral, Dr., W-6800 Mannheim 1 (DE); Neutzner, Josef, Dr., W-6730 Neustadt (DE)

(56) Entgegenhaltungen:
- EP-A- 0 129 699
- EP-A- 0 332 011
- EP-A- 0 338 486
- EP-A- 0 348 565
- EP-A- 0 478 193

## Beschreibung

Die vorliegende Erfindung betrifft ein Verfahren zur Herstellung einer wäßrigen Polymerisatenddispersion, dadurch gekennzeichnet, daß man ein Gemisch radikalisch polymerisierbarer Monomere, bestehend aus
A) 60 bis 100 Gew.-% wenigstens eines Monomeren aus der Gruppe umfassend Vinylaromaten mit bis zu 20 C-Atomen, 2 bis 8 C-Atome aufweisende Olefine, Vinyl- und Vinylidenhalogenide, Vinylester von 1 bis 20 C-Atome aufweisenden Monocarbonsäuren, Ester aus 3 bis 6 C-Atome aufweisenden α, β-monoethylenisch ungesättigten Mono- und Dicarbonsäuren mit 1 bis 20 C-Atome aufweisenden Alkanolen und monoethylenisch ungesättigte Nitrile mit 3 bis 6 C-Atomen, und
B) 0 bis 40 Gew.-% sonstigen radikalisch copolymerisierbaren Monomeren, ausgenommen konjugierte Kohlenwasserstoffe,
unter Zusatz wenigstens einer wäßrigen Dispersion eines Ausgangspolymerisats in einem Polymerisationsgefäß nach dem Verfahren der radikalischen wäßrigen Emulsionspolymerisation in Gegenwart grenzflächenaktiver Substanzen und radikalischer Polymerisationsinitiatoren mit der Maßgabe polymerisiert, daß
a) das Ausgangspolymerisat in der wenigstens einen wäßrigen Dispersion in Form dispers verteilter Ausgangspolymerisatteilchen vorliegt, deren gewichtsmittlerer Teilchendurchmesser 10 bis 100 nm beträgt,
b) die in Form der wenigstens einen wäßrigen Dispersion eines Ausgangspolymerisats insgesamt zugesetzte Menge an Ausgangspolymerisat, bezogen auf die Gesamtmenge des Endpolymerisats, 0,2 bis 3 Gew.-% beträgt,
c) die Gesamtmenge der wenigstens einen zuzusetzenden wäßrigen Dispersion eines Ausgangspolymerisats vor Beginn der radikalischen wäßrigen Emulsionspolymerisation ins Polymerisationsgefäß vorgelegt wird,
d) von der Gesamtmenge des wenigstens einen zu polymerisierenden Monomeren vor Beginn der radikalischen wäßrigen Emulsionspolymerisation 0,5 bis 8 Gew.-% ins Polymerisationsgefäß vorgelegt werden,
e) die wäßrige Polymerisatenddispersion, bezogen auf die Gesamtmasse gebildet aus der Masse des wenigstens einen radikalisch polymerisierbaren Monomeren und der in Form der wenigstens einen wäßrigen Dispersion zuzusetzenden Masse an Ausgangspolymerisat, 1 bis 8 Gew.-% grenzflächenaktive Substanzen enthält,
f) von der Gesamtmenge der in der wäßrigen Polymerisatenddispersion enthaltenen grenzflächenaktiven Substanzen vor Beginn der radikalischen wäßrigen Emulsionspolymerisation 10 bis 25 Gew.-% ins Polymerisationsgefäß vorgelegt werden,
g) zu jedem Zeitpunkt nach Beginn der radikalischen wäßrigen Emulsionspolymerisation die Masse der im Polymerisationsgefäß befindlichen Menge an grenzflächenaktiven Substanzen, bezogen auf die Masse der im Polymerisationsgefäß befindlichen Gesamtmenge an Monomeren und Polymerisat, wenigstens 1 % beträgt,
h) die insgesamt eingesetzte Menge an radikalischen Polymerisationsinitiatoren, bezogen auf die Gesamtmenge des wenigstens einen zu polymerisierenden Monomeren, 0,1 bis 5 Gew.-% beträgt,
i) von der insgesamt eingesetzten Menge an radikalischen Polymerisationsinitiatoren vor Beginn der radikalischen wäßrigen Emulsionspolymerisation 5 bis 25 Gew.-% ins Polymerisationsgefäß vorgelegt werden und die Restmenge im Verlauf der radikalischen wäßrigen Emulsionspolymerisation dem Polymerisationsgefäß so zugegeben wird, daß sich die radikalische wäßrige Emulsionspolymerisation bis zu einem Mindestpolymerisationsumsatz der Gesamtmenge des wenigstens einen zu polymerisierenden Monomeren von wenigstens 90 % fortsetzt und
j) nach Beginn der radikalischen wäßrigen Emulsionspolymerisation die Restmenge des wenigstens einen zu polymerisierenden Monomeren dem Polymerisationsgefäß in in wäßriger Phase voremulgierter Form zugeführt wird, und zwar so, daß zu jedem Zeitpunkt dieser Zufuhr der Polymerisationsumsatz der bereits zuvor dem Polymerisationsgefäß zugeführten Monomeren einschließlich der ins Polymerisationsgefäß vorgelegten Monomeren, bezogen auf die Gesamtmenge gebildet aus den zuvor dem Polymerisationsgefäß zugeführten Monomeren und den ins Polymerisationsgefäß vorgelegten Monomeren, wenigstens 90 % beträgt.

Wäßrige Polymerisatdispersionen sind Systeme, die als disperse Phase in einem wäßrigen Dispersionsmedium dispers verteilte Polymerisatteilchen enthalten.

Ebenso wie Polymerisatlösungen beim Verdampfen des Lösungsmittels weisen wäßrige Polymerisatdispersionen beim Verdampfen des wäßrigen Dispersionsmediums die Eigenschaft auf, Polymerisatfilme zu bilden, weshalb wäßrige Polymerisatdispersionen in vielfacher Weise als Bindemittel, als Klebstoffe oder als Massen zum Beschichten Anwendung finden.

Im Vergleich zu Polymerisatlösungen weisen wäßrige Polymerisatdispersionen jedoch den Nachteil auf, daß die dispergierten Polymerisatteilchen dazu neigen, sich aus Gründen der thermodynamischen Stabilität zusammenzulagern. Die dabei insbesondere während der Herstellung der wäßrigen Polymerisatdispersionen entstehenden Ausflockungen lassen sich grob in zwei Gruppen unterteilen: Mikroflockungen oder Stippen sowie Makroflockungen oder Koagulat. Während letztere in der flüssigen Dispersion bereits mit bloßem Auge zu erkennen und normalerweise durch übliche Filtration abtrennbar sind, können Stippen durch herkömmliche Filtration in der Regel nicht abgetrennt werden und sind in der flüssigen Dispersion mit bloßem Auge nicht zu erkennen. In günstigen Fällen kommt es lediglich zur Ausbildung von Mikroflockungen, die die Verarbeitung der wäßrigen Polymerisatdispersion zwar nicht unmöglich machen, insbesondere aber zu mit bloßem Auge sichtbaren punktuellen Störungen in den Verfilmungen der wäßrigen Polymerisatdispersionen führen und daher ebenso unerwünscht sind wie Koagulat. Des weiteren vermögen Verfilmungen wäßriger Polymerisatdispersionen hinsichtlich ihres Glanzes im Vergleich mit Verfilmungen von Polymerisatlösungen nicht voll zu befriedigen.

Ziel der vorliegenden Erfindung war daher, ein Verfahren zur Herstellung wäßriger Polymerisatdispersionen zur Verfügung zu stellen, nach welchem diese in einfacher, großtechnisch geeigneter und reproduzierbarer Weise mit einem reduzierten Gehalt an Ausflockungen so erhältlich sind,daß ihre Verfilmungen einen erhöhten Glanz aufweisen, wie er in vielen Fällen aus ästhetischen und anwendungstechnischen Gründen gefordert wird.

Demgemäß wurde das eingangs definierte Verfahren gefunden.

Aus der EP-A 129 699, der US-A 4,130,523 und der US-A 3,427,706 sind Verfahren zur radikalischen wäßrigen Emulsionspolymerisation radikalisch polymerisierbarer Monomere unter Zusatz von wäßrigen Dispersionen eines Ausgangspolymerisats bekannt. Diese Polymerisationsverfahren verfolgen jedoch das Ziel einer möglichst hohen Feststoffvolumenkonzentration des Polymerisats bzw. einer möglichst breiten Teilchenverteilung der dispergierten Polymerisatteilchen.

Aus der EP-A-0 348 565 ist ein Verfahren zur Herstellung von core-shell Polymerisaten bekannt, bei denen der Anteil des Kerns am Gesamtgewicht des Polymerisats bevorzugt zwischen 40 und 60 Prozent liegt.

Beispiele für als Monomere A geeignete vinylaromatische Monomere sind Styrol, α-Methylstyrol, o-Chlorstyrol oder Vinyltoluole, wobei Styrol bevorzugt wird. Als olefinisches Monomer sei insbesondere Ethylen genannt. Die Vinyl- und Vinylidenhalogenide sind mit Chlor, Fluor oder Brom substituierte monoethylenisch ungesättigte Verbindungen, vorzugsweise Vinylchlorid und Vinylidenchlorid. Als besonders in Frage kommende Vinylester seien Vinylacetat, Vinylpropionat, Vinyl-n-butyrat, Vinyllaurat und Vinylstearat genannt. Aus der Gruppe der Ester aus 3 bis 6 C-Atome aufweisenden α, β-monoethylenisch ungesättigten Mono- und Dicarbonsäuren mit 1 bis 20 C-Atome aufweisenden Alkanolen kommen insbesondere die Ester der Acryl- und Methacrylsäure in Betracht, mit im allgemeinen 1 bis 12, vorzugsweise 1 bis 8 und insbesondere 1 bis 4 C-Atome aufweisenden Alkanolen. Ganz besonders bevorzugt sind das Ethylacrylat und n-Butylacrylat, insbesondere in Kombination mit Methylmethacrylat. Beispiele für gut geeignete Nitrile sind Acrylnitril und Methacrylnitril.

Die Gruppe B umfaßt unter anderem solche Monomeren, die für sich polymerisiert üblicherweise Homopolymerisate ergeben, die eine erhöhte Wasserlöslichkeit aufweisen. Beispiele für derartige Monomere sind 3 bis 6 C-Atome aufweisende α, β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Vorzugsweise werden diese Monomeren, bezogen auf die Gesamtmenge der zu polymerisierenden Monomeren, mit einem Gewichtsanteil von 0,5 bis 20, besonders bevorzugt von 1 bis 10 Gew.-%, miteinpolymerisiert. Monomere B, die üblicherweise die innere Festigkeit der Verfilmungen der wäßrigen Polymerisatenddispersionen erhöhen, werden mit Vorteil ebenfalls nur in Mengen von 0,5 bis 10 Gew.-%, bezogen auf die Gesamtmenge der zu polymerisierenden Monomeren, miteinpolymerisiert. Normalerweise weisen derartige Monomere eine Epoxy-, Hydroxy-, N-Methylol- oder Carbonylgruppe auf. Beispiele hierfür sind N-Alkylolamide von 3 bis 10 C-Atome aufweisenden α, β-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind. Besonders geeignet sind darunter auch die Monoester zwei- oder mehrwertiger Alkohole mit α, β-monoethylenisch ungesättigten Monocarbonsäuren unter denen wiederum die Acryl- und Methacrylsäure vorzugsweise eingesetzt werden. Von besonderer Bedeutung sind z.B. die Methacrylsäure- und Acrylsäure-C₁-C₈-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat.

Ferner eignen sich als Monomere B die am Stickstoff mit C₁-C₄-Alkyl substituierten Derivate der Amide von 3 bis 6 C-Atome aufweisenden α, β-monoethylenisch ungesättigten Carbonsäuren sowie Ester der Acryl- und Methacrylsäure von einwertigen Alkoholen mit 1 bis 20 C-Atomen, die neben dem Sauerstoffatom in der Alkoholgruppe wenigstens ein weiteres Heteroatom enthalten und/oder einen aliphatischen oder aromatischen Ring aufweisen. Genannt seien 2-Ethoxyethylacrylat, 2-Butoxyethylacrylat, Dimethylaminoethylacrylat, Cyclohexylacrylat, Phenylethylacrylat, Furfurylacrylat und die entsprechenden Methacrylate. Neben ungesättigte Doppelbindungen aufweisenden Monomeren können in untergeordneten Mengen, üblicherweise 0,01 bis 2 Gew.-% bezogen auf die zu polymerisierenden Monomeren, das Molekulargewicht regelnde Substanzen wie tert.-Dodecylmercaptan sowie 3-Mercaptopropyltrimethoxysilan miteinpolymerisiert werden. Vorzugsweise werden derartige Substanzen im Gemisch mit den zu polymerisierenden Monomeren der Polymerisationszone zugegeben. Wäßrige Polymerisatenddispersionen mit einem besonders geringen Gehalt an Ausflockungen und Verfilmungen mit besonders erhöhtem Glanz werden dann erhalten, wenn Monomerengemische der nachfolgenden Zusammensetzung polymerisiert werden:
- 90 bis 100 Gew.-%: wenigstens eines Monomeren aus der Gruppe umfassend Styrol, Ester aus Acryl- oder Methacrylsäure mit 1 bis 8 C-Atome aufweisenden Alkanolen, Acrylnitril und Methacrylnitril
und
- 0 bis 10 Gew.-%: eines oder mehrerer Monomeren aus der Grupe umfassend Acrylsäure, Methacrylsäure, Acrylamid, Methacrylamid, n-Hydroxyethyl-, n-Hydroxybutylacrylat und -methacrylat, N-Alkylolamide der Acryl- und Methacrylsäure mit 1 bis 4 C-Atome aufweisenden Alkoholen sowie Diacetonacrylamid und Acetylacetoxyethylmethacrylat.
Ganz besonders bevorzugt sind Monomerengemische bestehend aus:
- 55 bis 90 Gew.-%: Ethylacrylat, n-Butylacrylat oder deren Gemisch,
- 10 bis 40 Gew.-%: Methylmethacrylat, und
- 0 bis 10 Gew.-%: Acrylsäure, Methacrylsäure, Acrylamid, Methacrylamid, n-Hydroxyethylacrylat, Diacetonacrylamid, Acetylacetoxyethylmethacrylat oder einem Gemisch dieser Monomeren.

Als grenzflächenaktive Substanzen kommen sowohl die zur Durchführung von radikalischen wäßrigen Emulsionspolymerisationen üblicherweise eingesetzten Schutzkolloide als auch Emulgatoren in Betracht. Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 60, Alkylrest: C₄ bis C₁₀), ethoxylierte Fettalkohole (EO-Grad: 3 bis 50, Alkylrest: C₈ bis C₃₆), sowie Alkali- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂ bis C₁₈) und ethoxylierter Alkylphenole (EO-Grad: 3 bis 50, Alkylrest C₄ bis C₉), von Alkylsulfonsäuren (Alkylrest: C₁₂ bis C₁₈), von sulfonierten ethoxylierten Alkylphenolen (EO-Grad: 2 bis 10, Alkylrest: C₄ bis C₁₀) und von Alkylarylsulfonsäuren (Alkylrest: C₉ bis C₁₈). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208.

Als besonders geeignete grenzflächenaktive Substanzen haben sich Verbindungen der allgemeinen Formel I 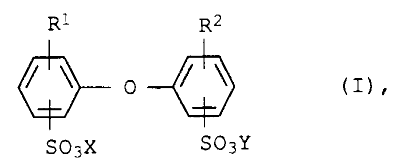 worin R¹ und R² Wasserstoff oder C₄- bis C₂₄-Alkyl bedeuten und nicht gleichzeitig Wasserstoff sind, und X und Y Alkalimetallionen und/oder Ammoniumionen sein können, erwiesen. In der Formel I bedeuten R¹ und R² bevorzugt lineare oder verzweigte Alkylreste mit 6 bis 18 C-Atomen oder Wasserstoff, und insbesondere mit 6, 12 und 16 C-Atomen, wobei R¹ und R² nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen I in denen X und Y Natrium, R¹ ein verzweigter Alkylrest mit 12 C-Atomen und R² Wasserstoff oder R¹ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen I sind allgemein bekannt, z.B. aus der US-A 4,269,749, und im Handel erhältlich.

Vorzugsweise werden die Verbindungen I im erfindungsgemäßen Verfahren im Gemisch mit ethoxylierten Alkylphenolen (EO-Grad vorzugsweise 45 bis 55, Alkylrest vorzugsweise 8 bis 10), ethoxylierten Fettalkoholen (vorzugsweise C₁₅ bis C20, EO-Grad vorzugsweise 16 bis 22) oder mit Alkalimetallsalzen sulfonierter ethoxylierter Alkylphenole (EO-Grad vorzugsweise 3 bis 6, Alkylrest vorzugsweise C₇ bis C₉) eingesetzt (Mischungsverhältnis in Gewichtsanteilen vorzugsweise 3:1 bis 1:3), wobei die Gemische mit den ethoxylierten Fettalkoholen ganz besonders bevorzugt sind. Mit Vorteil enthält die erfindungsgemäße wäßrige Polymerisatenddispersion, bezogen auf die Masse des Endpolymerisats, 1 bis 3 Gew.-% an grenzflächenaktiven Substanzen.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxidisulfate wie Natriumperoxidisulfat, als auch um Azoverbindungen handeln. Vorzugsweise werden kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure, und ganz besonders bevorzugt kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, eingesetzt, wobei anstelle von Ascorbinsäure auch häufig das Natriummetallsalz der Hydroxymethansulfinsäure, Natriumsulfit, Natriumhydrogensulfit oder Natriummetalldisulfit und anstelle von Wasserstoffperoxid tert.-Butylhydroperoxid oder Alkalimetallperoxidisulfate und/oder Ammoniumperoxidisulfate angewendet werden. Anstelle eines wasserlöslichen Eisen(II)-salzes wird häufig eine Kombination aus wasserlöslichen Fe/V-Salzen benutzt. Vorzugsweise beträgt die Menge der eingesetzten radikalischen Initiatorsysteme, bezogen auf die Gesamtmenge der zu polymerisierenden Monomeren, 0,1 bis 2 Gew.-%.

Polymerisationsdruck und Polymerisationstemperatur sind von eher untergeordneter Bedeutung. Im allgemeinen arbeitet man bei Temperaturen zwischen Raumtemperatur und 100°C, vorzugsweise bei Temperaturen von 50 bis 95°C. Die Anwendung von erhöhtem oder vermindertem Druck ist möglich, so daß die Polymerisationstemperatur auch 100°C überschreiten und bis zu 130°C betragen kann. Vorzugsweise werden leichtflüchtige Monomere wie Ethylen oder Vinylchlorid unter erhöhtem Druck polymerisiert.

Die für die erfindungsgemäße radialische wäßrige Emulsionspolymerisation als geeignet genannten Monomerenzusammensetzungen eignen sich nicht nur als Konstituenten des zu polymerisierenden Monomerengemisches. Vielmehr eignen sie sich in gleicher Weise wie die für die erfindungsgemäße radikalische wäßrige Emulsionspolymerisation empfohlenen radikalischen Polymerisationsinitiatoren und das Molekulargewicht regelnden Verbindungen auch als Konstituenten des Ausgangspolymerisats, wobei die Monomeren-, Regler- und Initiatorenzusammensetzung für die wäßrige Dispersion des Ausgangspolymerisats mit derjenigen für das erfindungsgemäß zu polymerisierende Monomerengemisch sowohl deckungsgleich als auch verschieden sein kann. Besonders gute Ergebnisse werden erhalten, wenn es sich bei dem wenigstens einen Ausgangspolymerisat um Polystyrol, Poly-n-Butylacrylat, um ein Copolymerisat aus 50 bis 55 Gew.-% n-Butylacrylat, 40 bis 45 Gew.-% Methylmethacrylat und 0 bis 5 Gew.-% Methacrylsäure oder ein Gemisch dieser Polymerisate handelt. Die ebenda gemachten Aussagen gelten im übertragenen Sinn notwendigerweise auch für die zur Herstellung der wäßrigen Dispersion des Ausgangspolymerisats einzusetzenden grenzflächenaktiven Substanzen, wird doch bei dem erfindungsgemäßen Verfahren wenigstens ein Teil der grenzflächenaktiven Substanzen als Bestandteil der wenigstens einen zuzusetzenden wäßrigen Dispersion eines Ausgangspolymerisats zugesetzt. Diese Menge an grenzflächenaktiven Substanzen muß selbstverständlich nicht vollständig bereits bei der radikalischen wäßrigen Emulsionspolymerisation zur Herstellung der wäßrigen Dispersion des Ausgangspolymerisats eingesetzt worden sein. Sie kann vielmehr teilweise auch nachträglich zur bereits auspolymerisierten wäßrigen Dispersion des Ausgangspolymerisats zugegeben werden. Im Grenzfall kann bei dem erfindungsgemäßen Verfahren die Gesamtmenge der benötigten grenzflächenaktiven Substanzen als Bestandteil der wenigstens einen zuzusetzenden wäßrigen Dispersion eines Ausgangspolymerisats zugesetzt werden.

Erfindungsgemäß zuzusetzende wäßrige Dispersionen eines Ausgangspolymerisats, in denen das Ausgangspolymerisat in Form dispers verteilter Ausgangspolymerisatteilchen mit einem gewichtsmittleren Teilchendurchmesser von 10 bis 100 nm, vorzugsweise 10 bis 50, besonders bevorzugt 25 bis 45 nm, vorliegt, sind in an sich bekannter Weise erhältlich. Entsprechende Lehren sind z.B.in Houben-Weyl, Methoden der Organischen Chemie, Band E20, Teil I, Makromolekulare Stoffe, Georg-Thieme-Verlag, Stuttgart, 1987, Seiten 248 bis 268, zu finden. Bei einem Feststoffgehalt von üblicherweise 20 bis 40 Gew.-% sind die Ausgangsdispersionen in besonders einfacher Weise z.B. dadurch erhältlich, daß man die wäßrige Phase, die Monomeren, die radikalischen Initiatoren (normalerweise 0,1 bis 5 Gew.-%, bezogen auf die Menge der zu polymerisierenden Ausgangsmonomeren) und grenzflächenaktiven Substanzen (üblicherweise 0,1 bis 30 Gew.-%, bezogen auf die zu polymerisierenden Ausgangsmonomeren) bei niederer Temperatur miteinander vermischt und nach Vermischen auf die Polymerisationstemperatur erwärmt und polymerisiert. Mit zunehmenden Mengen an grenzflächenaktiven Substanzen ergibt sich ein abnehmender durchschnittlicher Teilchendurchmesser. Vorzugsweise wird jedoch zur Herstellung der wenigstens einen wäßrigen Dispersion eines Ausgangspolymerisats ein Teil des Polymerisationsansatzes vorgelegt, auf die Polymerisationstemperatur erwärmt und anschließend unter Aufrechterhaltung der Polymerisation der Rest des Polymerisationsansatzes zugeführt. Die Vorlage kann beispielsweise die Gesamtmenge der Ausgangsmonomeren, den größten Teil des wäßrigen Dispersionsmediums sowie die Gesamtmenge an grenzflächenaktiven Substanzen umfassen, so daß im wesentlichen nur noch das Initiatorsystem, in der Regel als wäßrige Lösung, zugeführt wird. Die Vorlage kann aber auch nur einen Teil der Monomeren, einen Teil der benötigten grenzflächenaktiven Substanzen, einen Teil des Initiatorsystems und einen verhältnismäßig geringen Anteil des wäßrigen Dispersionsmediums umfassen. In diesem Fall werden die verbliebenen Ausgangsmonomeren und der Rest des Initiatorsystems üblicherweise über räumlich getrennte Zuläufe zudosiert, wobei die Ausgangsmonomeren vorzugsweise in Form einer wäßrigen Emulsion, die im wesentlichen die Restmengen an grenzflächenaktiver Substanz und wäßrigem Dispersionsmedium beinhaltet, zugeführt werden. Zur Herstellung der wenigstens einen wäßrigen Dispersion eines Ausgangspolymerisats werden vorzugsweise ausschließlich Verbindungen der allgemeinen Formel I eingesetzt, besonders bevorzugt Dowfax® 2A1. Die so erhältlichen wäßrigen Ausgangsdispersionen werden vorzugsweise ohne nachträglichen Zusatz anderer Emulgatoren eingesetzt. Hinsichtlich Polymerisationstemperatur und Druck zur Herstellung der wenigstens einen wäßrigen Dispersion eines Ausgangspolymerisats gelten die hinsichtlich des erfindungsgemäßen Verfahrens gemachten Aussagen. Selbstverständlich kann ein Teil der erfindungsgemäß zuzusetzenden wäßrigen Dispersion eines Ausgangspolymerisats unmittelbar vor Beginn des eigentlichen erfindungsgemäßen Verfahrens im selben Polymerisationsgefäß fertiggestellt werden. Beide Emulsionspolymerisationsverfahren können dabei nahtlos ineinander übergehen, insbesondere dann, wenn zur Herstellung dieses dann sozusagen vorgelegten Teils der wäßrigen Dispersion des Ausgangspolymerisats das Zulaufverfahren angewendet wird, bei dem man einen Teil des Polymerisationsansatzes vorlegt, auf die Polymerisationstemperatur erhitzt und unter Aufrechterhaltung der Polymerisation anschließend den Rest in gegebenenfalls räumlich getrennten Zuläufen zuführt.

Anspruchsgemäß wird das erfindungsgemäße Verfahren so durchgeführt, daß man die Gesamtmenge der wenigstens einen zuzusetzenden wäßrigen Dispersion eines Ausgangspolymerisats, die gerechnet als Trockenmasse und bezogen auf die Gesamtmenge des Endpolymerisats, 0,2 bis 3 Gew.-% beträgt, ins Polymerisationsgefäß vorlegt. Ferner ist es erfindungsgemäß, daß die Vorlage zusätzlich 0,5 bis 8 Gew.-% der Gesamtmenge der zu polymerisierenden Monomeren, 5 bis 25 Gew.-% der Gesamtmenge des Initiatorsystems und 10 bis 25 Gew.-% der Gesamtmenge der grenzflächenaktiven Substanzen (darin sind die grenzflächenaktiven Substanzen, die als Bestandteil der Saat vorgelegt werden, mit einbezogen) enthält. Das so vorgelegte Reaktionsgemisch wird auf die Polymerisationstemperatur erwärmt und nach Erreichen eines Polymerisationsumsatzes (in dieser Schrift, wie an sich üblich, stets auf molare Mengen bezogen) von wenigstens 90 %, bezogen auf die vorgelegten Monomeren, der Rest des Polymerisationsansatzes unter Aufrechterhaltung der Polymerisation zugeführt. Die verbliebenen Monomeren werden mit Vorteil in wäßriger Phase voremulgiert der Reaktionszone zugeführt, wobei zum Voremulgieren vorzugsweise die Restmenge der ingesamt anzuwendenden grenzflächenaktiven Substanzen verwendet wird und die Zufuhr räumlich getrennt von der Zufuhr der Restmenge des Initiatorsystems erfolgt. Die so zuzuführende wäßrige Monomerenemulsion enthält in der Regel auf 60 bis 90 Gew.-Teile Monomere 10 bis 40 Gew.-Teile Wasser und 0,1 bis 5 Gew.-Teile grenzflächenaktive Substanz. Die nach Beginn der wäßrigen radikalischen Emulsionspolymerisation erfolgende Monomerenzufuhr kann sowohl stufenförmig als auch kontinuierlich oder nach der Gradientenfahrweise erfolgen.

Generell werden die nach Beginn der radikalischen wäßrigen Emulsionspolymerisation zuzuführenden Monomeren vorzugsweise kontinuierlich zugeführt, wobei ganz besonders gute erfindungsgemäße Produkte dann erhalten werden, wenn im Verlauf dieser Zufuhr die Zufuhrgeschwindigkeit zunimmt, vorzugsweise auf das 3- bis 6-fache ihres Anfangswertes. Diese Zunahme kann sowohl stetig als auch diskontinuierlich erfolgen. Selbstverständlich kann der Reaktionszone nach Beginn der radikalischen wäßrigen Emulsionspolymerisation auch grenzflächenaktive Substanz für sich zugeführt werden, wobei diese Zufuhr mit Vorteil synchron zur Zufuhr der Monomeren erfolgt. Vorzugsweise wird die radikalische wäßrige Emulsionspolymerisation so geführt, daß zu jedem Zeitpunkt nach ihrem Beginn, die Masse der nach ihrem Beginn dem Polymerisationsgefäß zugeführten Menge an grenzflächenaktiven Substanzen, bezogen auf die Masse der im Polymerisationsgefäß befindlichen Gesamtmenge an Monomeren und Polymerisat, nicht mehr als 6 % beträgt. Im Extremfall können bis zu 50 % der insgesamt in der wäßrigen Polymerisatenddispersion enthaltenen Masse an grenzflächenaktiven Substanzen nach Beendigung des eigentlichen Polymeristionsvorganges zur nachträglichen Stabilisierung der wäßrigen Polymerisatenddispersion zugesetzt werden. Selbstverständlich kann sich im Verlauf der erfindungsgemäßen wäßrigen radikalischen Emulsionspolymerisation die Zusammensetzung der nach Beginn dem Polymerisationsgefäß zuzuführenden Monomeren ändern. Auf diese Weise sind besondere Strukturen der Teilchen des Endpolymerisats erhältlich, wie sie z.B. in Kast, Makromol. Chem. Suppl. 10/11, 447-461 (1985) beschrieben sind.

Nach Beendigung des eigentlichen Polymerisationsgverfahrens wird vorzugsweise noch einige Stunden unter Aufrechterhaltung der Polymerisationstemperatur nachgerührt. Daran können sich übliche Maßnahmen zur Restmonomerenentfernung, zur Einstellung eines anderen pH-Wertes oder sonstige Methoden zur Nachstabilisierung anschließen.

Selbstverständlich können die verschiedenen möglichen, in der Regel räumlich getrennt erfolgenden, Zuläufe unmittelbar vor Eintritt in das Polymerisationsgefäß miteinander vermischt werden. In der Regel werden die wäßrigen Polymerisatenddispersionen mit einem Feststoffgehalt zwischen 20 und 60 Gew.-% hergestellt.

Die nach dem erfindungsgemäßen Verfahren hergestellten wäßrigen Polymerisatenddispersionen werden wie beschrieben in der Regel mit voll befriedigender Reproduzierbarkeit, im wesentlichen in Abwesenheit vom Ausflockungen erhalten. Ihre Verfilmungen zeigen erhöhten Glanz und sind bemerkenswerterweise in der Regel transparent. Sie eignen sich generell als Bindemittel sowie insbesondere als Massen zur Herstellung hochglänzender tansparenter Schutzschichten sowie als Klebstoffe, insbesondere zum Verbinden (Kaschieren) zweier oder mehrerer Lagen von Folien zur Herstellung von Verbundfolien. Durch die Verbindung von Folien aus unterschiedlichen Werkstoffen werden Eigenschaften dieser Werkstoffe kombiniert. Ziel einer solchen Maßnahme kann es sein, besonders dekorative Effekte zu erzeugen oder technische Effekte wie Schutz eines Aufdrucks, Erzeugung kochfester Folienverbunde, Unterbindung der Dampfdiffusion oder Beständigkeit gegen agressive Güter, zu bewirken, wie sie im Rahmen der Lebensmittelverpackung verlangt werden. Die erfindungsgemäß hergestellten wäßrigen Polymerisatenddispersionen sind insbesondere dann von Vorteil, wenn transparente Folien miteinander verbunden werden sollen. Als Folienwerkstoffe kommen u.a. in Betracht Polyethylen, Polypropylen, insbesondere biaxial gerecktes Polypropylen, Polyamid, Polyester, PVC, Polyvinylacetate, Zellglas und Metalle wie Zinn und Aluminium. Selbstverständlich können den erfindungsgemäß hergestellten wäßrigen Polymerisatenddispersionen vor ihrer Anwendung in an sich bekannter Weise zusätzliche Hilfsstoffe wie Filmbildehilfsmittel, Füllstoffe oder Weichmacher zugesetzt werden. Besonders gut geeignete Klebstoffe sind solche wäßrigen Polymerisatenddispersionen, deren Endpolymerisat zu 0,01 bis 40 Gew.-% aus Monomeren aufgebaut ist, die wenigstens eine Aldehyd oder Ketogruppe aufweisen und als Zusatz wenigstens ein Polyisocyanat, dessen Isocyanatgruppen mit Oximen blokkiert sind, enthalten, wie es in der älteren Anmeldung P 41 21 946.5 beschrieben ist. Bevorzugt sind darüber hinaus wäßrige Polymerisatenddispersionen, deren Endpolymerisat eine Glasübergangstemperatur von -40 bis +50 °C aufweist.

### Beispiele

Die Bestimmungen der Teilchendurchmesser wurden mittels der analytischen Ultrazentrifuge durchgeführt (W. Mächtle, Makromolekulare Chemie, Bd. 185 (1984) S. 1025-1039, bzw. W. Mächtle, Angewandte Makromolekulare Chemie 162 (1988) 35-42 (Nr. 2735)).
1) Herstellung wäßriger Dispersionen von Ausgangspolymerisaten
   DAa) : Ein Gemisch aus
      - 13,1 g: einer 30 gew.-%igen wäßrigen H202-Lösung,
      - 13,8 g: einer 45 gew.-%igen wäßrigen Lösung der Dowfax 2A1 entsprechenden grenzflächenaktiven Substanz,
      - 36,0 g: n-Butylacrylat und
      - 407 g: Wasser
      wurde bei Raumtemperatur (27°C) mit 25 Gew.-% des Zulauf 2 versetzt. Nach 15 Minuten wurden, zeitgleich beginnend, innerhalb von 1,5 h die Restmenge des Zulauf 2 und innerhalb von 1 h der Zulauf 1 jeweils kontinuierlich zugeführt, wobei die Reaktionswärme so abgeführt wurde, daß die Reaktionstemperatur im Verlauf der Polymerisation auf 60°C anstieg. Es wurde eine wäßrige Dispersion eines Ausgangspolymerisats mit einem gewichtsmittleren Teilchendurchmesser von 30 nm erhalten.
      Zulauf 1:
         - 367 g: n-Butylacrylat
         - 367 g: Methylmethacrylat
         - 15 g: Methacrylsäure
         - 16,5 g: einer 45 gew.-%igen wäßrigen Lösung der Dowfax 2A1 entsprechenden grenzflächenaktiven Substanz und
         - 900 g: Wasser
      Zulauf 2:
         - 3,9 g: Ascorbinsäure
         - 0,1 g: Eisen(II)-sulfat und
         - 560 g: Wasser
   DAb) : In ein Gemisch aus
      - 67,4 g: Wasser
      - 25,0 g: n-Butylacrylat
      - 22,5 g: einer 20 gew.-%igen wäßrigen Lösung der Dowfax 2A1 entsprechenden grenzflächenaktiven Substanz und
      - 0,5 g: Wasserstoffperoxid
      wurde bei Raumtemperatur (27°) innerhalb von 5 Minuten ein Gemisch aus
      - 2 g: Wasser
      - 0,0625 g: Ascorbinsäure und
      - 0,005 g: Eisen(II)-sulfat
      eingerührt, wobei die Innentemperatur auf 55°C anstieg. Anschließend wurde 30 min. weitergerührt und abschließend nach Zugabe von 0,5 g Ascorbinsäure noch 1 h nachgerührt. Es wurde eine wäßrige Dispersion eines Ausgangspolymerisats mit einem gewichtsmittleren Teilchendurchmesser von 30 nm erhalten.
2) Erfindungsgemäße Herstellung wäßriger Polymerisatenddispersionen
   DEa) : Ein Gemisch aus
      - 33,3 g: der wäßrigen Ausgangsdispersion DAa) aus 1) und
      - 2,5 g: einer 20 gew.-%igen wäßrigen Lösung der Dowfax 2A1 entsprechenden grenzflächenaktiven Substanz
      wurde auf 85°C erhitzt und bei dieser Temperatur auf einmal mit
      3 Gew.-% Zulauf 1 und danach
      20 Gew.-% Zulauf 2
      versetzt und 15 min bei 80°C gerührt; anschließend wurden die Restmengen der Zuläufe 1 und 2 zeitgleich beginnend kontinuierlich gemäß nachfolgendem Zeitschema unter Aufrechterhaltung der 85°C zugeführt:
      Zulauf 1: 8 Gew.-% innerhalb von 1 h
         dann 89 Gew.-% innerhalb von 2,5 h
      Zulauf 2: 80 Gew.-% innerhalb von 4 h (Gew.-% bezogen auf die Gesamtmenge)
      Nach Beendigung des Zulauf 2 wurde noch 1 h nachpolymerisiert.
      Zulauf 1:
         - 375 g: Ethylacrylat
         - 100 g: Methylmethacrylat
         - 10 g: Acrylsäure
         - 10 g: n-Hydroxyethylacrylat
         - 22,5 g: einer 20 gew.-%igen wäßrigen Lösung der Dowfax 2A1 entsprechenden grenzflächenaktiven Substanz
         - 50 g: einer 20 gew.-%igen wäßrigen Mischung eines Gemisches ethoxylierter Fettalkohole (C₁₆ bis C₁₈, EO-Grad: 18) und
         - 104,17 g: Wasser
      Zulauf 2:
         - 2,5 g: Natriumperoxidisulfat und
         - 100 g: Wasser
   DEb) : Ein Gemisch aus
      - 5 g: einer 30 gew.-%igen H₂O₂-Lösung
      - 33 g: der wäßrigen Ausgangsdispersion DAa)
      - 2,5 g: einer 20 gew.-%igen wäßrigen Lösung der Dowfax 2A1 entsprechenden grenzflächenaktiven Substanz,
      wurde auf 50°C erhitzt und bei dieser Temperatur auf einmal mit
      3 Gew.-% Zulauf 1 und danach
      20 Gew.-% Zulauf 2
      versetzt und 15 Min. bei 60°C gerührt; anschließend wurden die Restmengen der Zuläufe 1 und 2 zeitgleich beginnend kontinuierlich gemäß nachfolgendem Zeitschema unter Aufrechterhaltung der 60°C zugeführt:
      Zulauf 1: 8 Gew.-% innerhalb von 1 h
         dann 89 Gew.-% innerhalb von 2,5 h
      Zulauf 2: 80 Gew.-% innerhalb von 4 h (Gew.-% bezogen auf die Gesamtmenge)
      Nach Beendigung des Zulauf 2 wurde noch 1 h nachpolymerisiert.
      Zulauf 1:
         - 22,5 g: einer 20 gew.-%igen wäßrigen Lösung der Dowfax 2A1 entsprechenden grenzflächenaktiven Substanz
         - 50 g: einer 20 gew.-%igen wäßrigen Mischung eines Gemisches ethoxylierter Fettalkohole (C₁₆ bis C₁₈, EO-Grad: 18)
         - 375 g: Ethylacrylat
         - 100 g: Methylmethacrylat
         - 10 g: Acrylsäure
         - 10 g: n-Hydroxyethylacrylat und
         - 101 g: Wasser
      Zulauf 2:
         - 1,5 g: Ascorbinsäure, 0,05 g Eisen(II)-sulfat und
         - 100 g: Wasser
   DEc) Ein Gemisch aus
      - 33,3 g: der wäßrigen Ausgangsdispersion DAa) aus 1) und
      - 2,5 g: einer 20 gew.-%igen wäßrigen Lösung der Dowfax 2A1 entsprechenden grenzflächenaktiven Substanz
      wurde auf 85°C erhitzt und bei dieser Temperatur auf einmal mit
      3 Gew.-% Zulauf 1 und danach
      20 Gew.-% Zulauf 2
      versetzt und 15 min bei 80°C gerührt; anschließend werden die Restmengen der Zuläufe 1 und 2 zeitgleich beginnend kontinuierlich gemäß nachfolgendem Zeitschema unter Aufrechterhaltung der 85°C zugeführt:
      Zulauf 1: 8 Gew.-% innerhalb von 1 h dann 89 Gew.-% innerhalb 2,5 h
      Zulauf 2: 80 Gew.-% innerhalb von 4 h (Gew.-% bezogen auf die Gesamtmenge)
      Nach Beendigung des Zulaufs 2 wurde noch 1 h nachpolymerisiert.
      Zulauf 1:
         - 375 g: Ethylacrylat
         - 100 g: Methylmethacrylat
         - 10 g: Acrylsäure
         - 10 g: Diacetonacrylamid
         - 22,5 g: einer 20 gew.-%igen wäßrigen Lösung der Dowax 2A1 entsprechenden grenzflächenaktiven Substanz
         - 50 g: einer 20 gew.-%igen wäßrigen Mischung eines Gemisches ethoxylierter Fettalkohole (C₁₆ bis C₁₈, EG-Grad: 18) und
         - 104,17 g: Wasser
      Zulauf 2:
         - 2,5 g: Natriumperoxidisulfat und
         - 100 g: Wasser
   DEd) Ein Gemisch aus
      - 5 g: einer 30 gew.-%igen H₂O₂-Lösung
      - 33 g: der wäßrigen Ausgangsdisperison DAa) aus 1) und
      - 2,5 g: einer 30 gew.-%igen wäßrigen Lösung der Dowfax 2A1 entsprechenden grenzflächenaktiven Substanz,
      wurde auf 50°C erhitzt und bei dieser Temperatur auf einmal mit
      3 Gew.-% Zulauf 1 und danach
      20 Gew.-% Zulauf 2
      versetzt und 15 min bei 60°C gerührt; anschließend wurden die Restmengen der Zuläufe 1 und 2 zeitgleich beginnend kontinuierlich gemäß nachfolgendem Zeitschema unter Aufrechterhaltung der 60°C zugeführt:
      Zulauf 1: 8 Gew.-% innerhalb von 1 h
         dann 89 Gew.-% innerhalb 2,5 h
      Zulauf 2: 80 Gew.-% innerhalb von 4 h (Gew.-% bezogen auf die Gesamtmenge)
      Nach Beendigung des Zulaufs 2 wurde noch 1 h nachpolymerisiert.
      Zulauf 1:
         - 22,5 g: einer 20 gew.-%igen wäßrigen Lösung der Dowfax 2A1 entsprechenden grenzflächenaktiven Substanz
         - 50 g: einer 20 gew.-%igen wäßrigen Mischung eines Gemisches ethoxylierter Fettalkohole (C₁₆ bis C₁₈, EG-Grad: 18)
         - 375 g: Ethylacrylat
         - 100 g: Methylmethacrylat
         - 10 g: Acrylsäure
         - 10 g: Diacetonacrylamid und
         - 101 g: Wasser
      Zulauf 2:
         - 1,5 g: Ascorbinsäure,
         - 0,05 g: Eisen(II)-sulfat und
         - 100 g: Wasser
   DEe) Ein Gemisch aus
      - 10,0 g: der wäßrigen Ausgangsdispersion DAa) aus 1) und
      - 2,5 g: einer 20 gew.-%igen wäßrigen Lösung der Dowfax 2A1 entsprechenden grenzflächenaktiven Substanz
      wurde auf 85°C erhitzt und bei dieser Temperatur auf einmal mit
      3 Gew.-% Zulauf 1 und danach
      20 Gew.-% Zulauf 2
      versetzt (50 min nach diesem Zeitpunkt wurde Zulauf 3 innerhalb von 2 h kontinuierlich zugeführt) und 15 min bei 80°C gerührt; anschließend wurden die Restmengen der Zuläufe 1 und 2 zeitgleich beginnend kontinuierlich gemäß nachfolgendem Zeitschema unter Aufrechterhaltung der 85°C zugeführt:
      Zulauf 1: 8 Gew.-% innerhalb von 1 h dann 89 Gew.-% innerhalb 2,5 h
      Zulauf 2: 80 Gew.-% innerhalb von 4 h (Gew.-% bezogen auf die Gesamtmenge)
      Nach Beendigung des Zulaufs 2 wurde noch 1 h nachpolymerisiert.
      Zulauf 1:
         - 375 g: Ethylacrylat
         - 100 g: Methylmethacrylat
         - 10 g: Acrylsäure
         - 10 g: n-Hydroxyethylacrylat
         - 22,5 g: einer 20 gew.-%igen wäßrigen Lösung der Dowax 2A1 entsprechenden grenzflächenaktiven Substanz
         - 50 g: einer 20 gew.-%igen wäßrigen Mischung eines Gemisches ethoxylierter Fettalkohole (C₁₆ bis C₁₈, EG-Grad: 18) und
         - 104,17 g: Wasser
      Zulauf 2:
         - 2,5 g: Natriumperoxidisulfat und
         - 100 g: Wasser
      Zulauf 3:
         - 23,3 g: der wäßrigen Ausgangsdispersion DAa) aus 1)
   DEf) Ein Gemisch aus
      - 5 g: einer 30 gew.-%igen H₂O₂-Lösung
      - 10,0 g: der wäßrigen Ausgangsdisperison DAa) aus 1) und
      - 2,5 g: einer 20 gew.-%igen wäßrigen Lösung der Dowfax 2A1 entsprechenden grenzflächenaktiven Substanz,
      wurde auf 50°C erhitzt und bei dieser Temperatur auf einmal mit
      3 Gew.-% Zulauf 1 und danach
      20 Gew.-% Zulauf 2
      versetzt (50 min nach diesem Zeitpunkt wurde Zulauf 3 innerhalb von 2 h kontinuierlich zugeführt) und 15 min bei 60°C gerührt; anschließend wurden die Restmengen der Zuläufe 1 und 2 zeitgleich beginnend kontinuierlich gemäß nachfolgendem Zeitschema unter Aufrechterhaltung der 60°C zugeführt:
      Zulauf 1: 8 Gew.-% innerhalb von 1 h dann 89 Gew.-% innerhalb 2,5 h
      Zulauf 2: 80 Gew.-% innerhalb von 4 h (Gew.-% bezogen auf die Gesamtmenge)
      Nach Beendigung des Zulaufs 2 wurde noch 1 h nachpolymerisiert.
      Zulauf 1:
         - 22,5 g: einer 20 gew.-%igen wäßrigen Lösung der Dowfax 2A1 entsprechenden grenzflächenaktiven Substanz
         - 50 g: einer 20 gew.-%igen wäßrigen Mischung eines Gemisches ethoxylierter Fettalkohole (C₁₆ bis C₁₈, EO-Grad: 18)
         - 375 g: Ethylacrylat
         - 100 g: Methylmethacrylat
         - 10 g: Acrylsäure
         - 10 g: n-Hydroxyethalacrylat und
         - 101 g: Wasser
      Zulauf 2:
         - 1,5 g: Ascorbinsäure, 0,05 g Eisen(II)-sulfat
         - 100 g: Wasser
      Zulauf 3:
         - 23,0 g: der wäßrigen Ausgangsdispersion DAa) aus 1)
   DEg)
      - Vorlage:: 22,63 g Zulauf 2
      42,00 g Zulauf3
      300,00 g Wasser

      Zulauf 1:
         - 1710 g: n-Butylacrylat
         - 250 g: Methylmethacrylat
         - 40 g: Methacrylsäure
         - 1 g: tert. Dodecylmercaptan
         - 50 g: einer 20 gew.-%igen wäßrigen Mischung eines Gemisches ethoxylierter Fettalkohole (C₁₆ bis C₁₈, EG-Grad: 18)
         - 100 g: einer 20 gew.-%igen wäßrigen Lösung der Dowfax 2A1 entsprechenden grenzflächenaktiven Substanz
         - 1 g: 3-Mercaptopropyl-trimethoxysilan
      Zulauf 2:
         - 13,33 g: der wäßrigen Ausgangsdispersion DAa) aus 1
         - 5 g: einer 20 gew.-%igen wäßrigen Lösung der Dowfax 2A1 entsprechenden grenzflächenaktiven Substanz
         - 8 g: einer 25 gew.-%igen wäßrigen Ammoniaklösung
         - 200 g: Wasser
      Zulauf 3:
         - 10 g: Natriumperoxidisulfat
         - 200 g: Wasser
      Das vorgelegte Gemisch wurde auf 85°C erhitzt (30 min danach wurden die Restmenge von Zulauf 2, innerhalb von 2 h, und die Restmenge von Zulauf 1, innerhalb von 3 h, zeitgleich beginnend kontinuierlich zugeführt). Anschließend wurden der Reaktionszone zeitgleich beginnend 4 Gew.-% von Zulauf 1, innerhalb von 30 min, und Zulauf 3, innerhalb von 4 h, kontinuierlich zugeführt. Die Temperatur der Reaktionsmischung wurde stets auf 85°C gehalten.
   Zum Vergleich wurden die Dispersionen VDEa) und VDEb) hergestellt. Die Herstellungsweise entsprach derjenigen für DEa) und DEb), abgesehen davon, daß auf den Zusatz der wäßrigen Dispersion eines Ausgangspolymerisats verzichtet wurde.
3) Anwendungstechnische Prüfung der erfindungsgemäß hergestellten wäßrigen Polymerisatenddispersionen und der Vergleichsdispersionen aus 2)
   Auf rechteckigen Glasplatten (25x8cm) wurden Proben der Dispersionen zu Filmen einer Trockenschichtdicke von 30 µm bei Raumtemperatur (27°) verfilmt und anschließend visuell beurteilt. Das Ergebnis zeigt die Tabelle.

**Tabelle**

| Dispesrsion | Stippen (Anzahl/Größe | Aussehen |
|---|---|---|
| DEa) | 4/klein | glänzend |
| DEb) | 6/klein | glänzend |
| DEc) | 4/klein | glänzend |
| DEd) | 7/klein | glänzend |
| DEe) | 15/klein | glänzend |
| DEf) | 10/klein | glänzend |
| DEg) | 20/klein | glänzend |
| VDEa) | 160/groß | matt |
| VDEb) | 141/groß | matt |

## Patentansprüche

1. Verfahren zur Herstellung einer wäßrigen Polymerisatenddispersion, dadurch gekennzeichnet, daß man ein Gemisch radikalisch polymerisierbarer Monomere, bestehend aus
A) 60 bis 100 Gew.-% wenigstens eines Monomeren aus der Gruppe umfassend Vinylaromaten mit bis zu 20 C-Atomen, 2 bis 8 C-Atome aufweisende Olefine, Vinyl- und Vinylidenhalogenide, Vinylester von 1 bis 20 C-Atome aufweisenden Monocarbonsäuren, Ester aus 3 bis 6 C-Atome aufweisenden α, β-monoethylenisch ungesättigten Mono- und Dicarbonsäuren mit 1 bis 20 C-Atome aufweisenden Alkanolen und monoethylenisch ungesättigte Nitrile mit 3 bis 6 C-Atomen, und
B) 0 bis 40 Gew.-% sonstigen radikalisch copolymerisierbaren Monomeren, ausgenommen konjugierte Kohlenwasserstoffe,
unter Zusatz wenigstens einer wäßrigen Dispersion eines Ausgangspolymerisats in einem Polymerisationsgefäß nach dem Verfahren der radikalischen wäßrigen Emulsionspolymerisation in Gegenwart grenzflächenaktiver Substanzen und radikalischer Polymerisationsinitiatoren mit der Maßgabe polymerisiert, daß
a) das Ausgangspolymerisat in der wenigstens einen wäßrigen Dispersion in Form dispers verteilter Ausgangspolymerisatteilchen vorliegt, deren gewichtsmittlerer Teilchendurchmesser 10 bis 100 nm beträgt,
b) die in Form der wenigstens einen wäßrigen Dispersion eines Ausgangspolymerisats insgesamt zugesetzte Menge an Ausgangspolymerisat, bezogen auf die Gesamtmenge des Endpolymerisats, 0,2 bis 3 Gew.-% beträgt,
c) die Gesamtmenge der wenigstens einen zuzusetzenden wäß-' rigen Dispersion eines Ausgangspolymerisats vor Beginn der radikalischen wäßrigen Emulsionspolymerisation ins Polymerisationsgefäß vorgelegt wird,
d) von der Gesamtmenge des wenigstens einen zu polymerisierenden Monomeren vor Beginn der radikalischen wäßrigen Emulsionspolymerisation 0,5 bis 8 Gew.-% ins Polymerisationsgefäß vorgelegt werden,
e) die wäßrige Polymerisatenddispersion, bezogen auf die Gesamtmasse gebildet aus der Masse des wenigstens einen radikalisch polymerisierbaren Monomeren und der in Form der wenigstens einen wäßrigen Dispersion zuzusetzenden Masse an Ausgangspolymerisat, 1 bis 8 Gew.-% grenzflächenaktive Substanzen enthält,
f) von der Gesamtmenge der in der wäßrigen Polymerisatenddispersion enthaltenen grenzflächenaktiven Substanzen vor Beginn der radikalischen wäßrigen Emulsionspolymerisation 10 bis 25 Gew.-% ins Polymerisationsgefäß vorgelegt werden,
g) zu jedem Zeitpunkt nach Beginn der radikalischen wäßrigen Emulsionspolymerisation die Masse der im Polymerisationsgefäß befindlichen Menge an grenzflächenaktiven Substanzen, bezogen auf die Masse der im Polymerisationsgefäß befindlichen Gesamtmenge an Monomeren und Polymerisat, wenigstens 1 % beträgt,
h) die insgesamt eingesetzte Menge an radikalischen Polymerisationsinitiatoren, bezogen auf die Gesamtmenge des wenigstens einen zu polymerisierenden Monomeren, 0,1 bis 5 Gew.-% beträgt,
i) von der insgesamt eingesetzten Menge an radikalischen Polymerisationsinitiatoren vor Beginn der radikalischen wäßrigen Emulsionspolymerisation 5 bis 25 Gew.-% ins Polymerisationsgefäß vorgelegt werden und die Restmenge im Verlauf der radikalischen wäßrigen Emulsionspolymerisation dem Polymerisationsgefäß so zugegeben wird, daß sich die radikalische wäßrige Emulsionspolymerisation bis zu einem Mindestpolymerisationsumsatz der Gesamtmenge des wenigstens einen zu polymerisierenden Monomeren von wenigstens 90 % fortsetzt und
j) nach Beginn der radikalischen wäßrigen Emulsionspolymerisation die Restmenge des wenigstens einen zu polymerisierenden Monomeren dem Polymerisationsgefäß in in wäßriger Phase voremulgierter Form zugeführt wird, und zwar so, daß zu jedem Zeitpunkt dieser Zufuhr der Polymerisationsumsatz der bereits zuvor dem Polymerisationsgefäß zugeführten Monomeren einschließlich der ins Polymerisationsgefäß vorgelegten Monomeren, bezogen auf die Gesamtmenge gebildet aus den zuvor dem Polymerisationsgefäß zugeführten Monomeren und den ins Polymerisationsgefäß vorgelegten Monomeren, wenigstens 90 % beträgt.

## Claims

1. A process for preparing a final aqueous polymer dispersion, which comprises polymerizing a mixture of free-radically polymerizable monomers comprising
A) from 60 to 100% by weight of at least one monomer from the group consisting of aromatic vinyl compounds having up to 20 carbon atoms, olefins of from 2 to 8 carbon atoms, vinyl and vinylidene halides, vinyl esters of monocarboxylic acids of from 1 to 20 carbon atoms, esters of α,β-monoethylenically unsaturated mono- and dicarboxylic acids of from 3 to 6 carbon atoms with alkanols of from 1 to 20 carbon atoms, and monoethylenically unsaturated nitriles of from 3 to 6 carbon atoms, and
B) from 0 to 40% by weight of other free-radically copolymerizable monomers other than conjugated hydrocarbons,
with the addition of at least one aqueous dispersion of a starting polymer in a polymerization vessel by the method of free radical aqueous emulsion polymerization in the presence of surface active substances and free radical polymerization initiators with the proviso that
a) the starting polymer is present in the at least one aqueous dispersion in the form of dispersed starting polymer particles whose weight average particle diameter is from 10 to 100 nm,
b) the total amount of starting polymer added in the form of the at least one aqueous dispersion of a starting polymer is from 0.2 to 3% by weight, based on the total amount of final polymer,
c) the total amount of the at least one aqueous dispersion of a starting polymer to be added is introduced into the polymerization vessel as initial charge prior to the start of the free radical aqueous emulsion polymerization,
d) of the total amount of the at least one monomer to be polymerized the amount introduced into the polymerization vessel as initial charge prior to the start of the free radical aqueous emulsion polymerization is from 0.5 to 8% by weight,
e) the final aqueous polymer dispersion contains from 1 to 8% by weight of surface active substances, based on the total mass formed from the mass of the at least one free-radically polymerizable monomer and from the mass of starting polymer to be added in the form of the at least one aqueous dispersion,
f) of the total amount of the surface active substances present in the final aqueous polymer dispersion the amount introduced into the polymerization vessel as initial charge prior to the start of the free radical aqueous emulsion polymerization is from 10 to 25% by weight,
g) at any time after the start of the free radical aqueous emulsion polymerization the mass of the amount of surface active substances present in the polymerization vessel relative to the mass of the total amount of monomers and polymer present in the polymerization vessel is at least 1%,
h) the total amount used of free radical polymerization initiators is from 0.1 to 5% by weight, based on the total amount of the at least one monomer to be polymerized,
i) of the total amount used of free radical polymerization initiators the amount introduced into the polymerization vessel as initial charge prior to the start of the free radical aqueous emulsion polymerization is from 5 to 25% by weight and the remaining amount is added to the polymeriz-ation vessel in the course of the free radical aqueous emulsion polymerization in such a way that the free radical aqueous emulsion polymerization continues to a minimum polymerization conversion of at least 90% of the total amount of the at least one monomer to be polymerized, and
j) after the start of the free radical aqueous emulsion polymerization the remaining amount of the at least one monomer to be polymerized is added to the polymerization vessel preemulsified in an aqueous phase, in such a way that at any time of this addition the polymerization conversion of the monomers already added previously to the polymerization vessel including the monomers introduced into the polymerization vessel as initial charge is at least 90%, based on the total amount formed from the monomers added previously to the polymerization vessel and from the monomers introduced into the polymerization vessel as initial charge.

## Revendications

1. Procédé de préparation d'une dispersion aqueuse finale de polymère, caractérisé en ce que l'on polymérise un mélange de monomères susceptibles de polymérisation radicalaire, composé de
A) 60 à 100% en poids d'au moins un monomère du groupe comprenant les composés vinylaromatiques renfermant jusqu'à 20 atomes de carbone, les oléfines à 2-8 atomes de carbone, les halogénures de vinyle et de vinylidène, les esters vinyliques d'acides monocarboxyliques à 1-20 atomes de carbone, les esters d'acides mono- et dicarboxyliques à 3-6 atomes de carbone et à insaturation α,β-monoéthylénique et d'alcanols à 1-20 atomes de carbone et les nitriles à 3-6 atomes de carbone et à insaturation monoéthylénique, et
B) 0 à 40% en poids d'autres monomères susceptibles de co-polymérisation radicalaire, à l'exclusion d'hydrocarbures conjugués,
avec addition d'au moins une dispersion aqueuse d'un polymère de départ, dans un récipient de polymérisation, suivant le procédé de la polymérisation radicalaire en émulsion aqueuse, en présence de substances tensio-actives et d'amorceurs de polymérisation radicalaires, étant spécifié que
a) le polymère de départ est présent, dans la dispersion aqueuse ajoutée au moins, sous forme de particules de polymère de départ réparties en dispersion, dont le diamètre (moyenne en poids) est compris entre 10 et 100 nm,
b) la quantité de polymère de départ ajoutée au total sous forme d'au moins une dispersion aqueuse d'un polymère de départ est de 0,2 à 3% en poids par rapport à la quantité totale du polymère final,
c) la quantité totale de la dispersion aqueuse d'un polymère de départ à ajouter au moins est placée au préalable dans le récipient de polymérisation, avant le début de la polymérisation radicalaire en émulsion aqueuse,
d) sur la quantité totale du monomère à polymériser au moins, 0,5 à 8% en poids sont placés au préalable dans le récipient de polymérisation, avant le début de la polymérisation radicalaire en émulsion aqueuse,
e) la dispersion aqueuse finale de polymère contient 1 à 8% en poids de substances tensio-actives, par rapport à la masse totale constituée par la masse du monomère susceptible de polymérisation radicalaire au moins et par la masse du polymère de départ à ajouter sous forme d'au moins une dispersion aqueuse,
f) sur la quantité totale des substances tensio-actives contenues dans la dispersion aqueuse finale de polymère, 10 à 25% en poids sont placés au préalable dans le récipient de polymérisation, avant le début de la polymérisation radicalaire en émulsion aqueuse,
g) à tout moment après le début de la polymérisation radicalaire en émulsion aqueuse, la masse de la quantité de substances tensio-actives qui se trouve dans le récipient de polymérisation s'élève à 1% au moins par rapport à la masse de la quantité totale de monomères et de polymère qui se trouve dans le récipient de polymérisation,
h) la quantité utilisée au total d'amorceurs radicalaires de polymérisation est comprise entre 0,1 et 5% en poids, par rapport à la quantité totale du monomère à polymériser au moins,
i) sur la quantité utilisée au total d'amorceurs radicalaires de polymérisation, 5 à 25% en poids sont placés au préalable dans le récipient de polymérisation avant le début de la polymérisation radicalaire en émulsion aqueuse, et la quantité restante est ajoutée au récipient de polymérisation au cours de la polymérisation radicalaire en émulsion aqueuse, de telle sorte que la polymérisation radicalaire en émulsion aqueuse se poursuive jusqu'à un degré de transformation minimal d'au moins 90% de la quantité totale du monomère à polymériser au moins,
j) après le début de la polymérisation radicalaire en émulsion aqueuse, la quantité restante du monomère à polymériser au moins est introduite dans le récipient de polymérisation sous forme pré-émulsionnée dans la phase aqueuse, et cela de telle sorte qu'à chaque instant de cette introduction, le degré de transformation des monomères déjà introduits précédemment dans le récipient de polymérisation, y compris des monomères placés au préalable dans le récipient de polymérisation, s'élève au moins à 90%, par rapport à la quantité totale constituée par les monomères introduits précédemment dans le récipient de polymérisation et par les monomères placés au préalable dans le récipient de polymérisation.
